(19) Europäisches Patentamt
European Patent Office
Office européen des brevets

(11) **EP 2 219 387 B1**

(12) **EUROPEAN PATENT SPECIFICATION**

(45) Date of publication and mention
of the grant of the patent:
**07.05.2014 Bulletin 2014/19**

(51) Int Cl.:
***H04M 1/18*** *(2006.01)*    ***H04M 1/03*** *(2006.01)*

(21) Application number: **08836909.5**

(22) Date of filing: **07.10.2008**

(86) International application number:
**PCT/JP2008/068240**

(87) International publication number:
**WO 2009/048062 (16.04.2009 Gazette 2009/16)**

(54) **SOUND PASSING MEMBER UTILIZING WATERPROOF SOUND PASSING MEMBRANE AND PROCESS FOR MANUFACTURING THE SAME**

EINE WASSERDICHTE SCHALLDURCHLASSMEMBRAN VERWENDENDES SCHALLDURCHLASSGLIED UND HERSTELLUNGSPROZESS DAFÜR

ELÉMENT LAISSANT PASSER LE SON UTILISANT UNE MEMBRANE ÉTANCHE LAISSANT PASSER LE SON ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.10.2007  JP 2007263158**

(43) Date of publication of application:
**18.08.2010  Bulletin 2010/33**

(73) Proprietor: **Nitto Denko Corporation**
**Ibaraki-shi**
**Osaka 567-8680 (JP)**

(72) Inventors:
 • **SANAMI, Akira**
   **Ibaraki-shi**
   **Osaka 567-8680 (JP)**
 • **MATSUDA, Eiji**
   **Ibaraki-shi**
   **Osaka 567-8680 (JP)**
 • **ERIGUCHI, Fuyuki**
   **Ibaraki-shi**
   **Osaka 567-8680 (JP)**

(74) Representative: **Intès, Didier Gérard André et al**
**Cabinet Beau de Loménie**
**158, rue de l'Université**
**75340 Paris Cedex 07 (FR)**

(56) References cited:
**EP-A2- 1 703 764     DE-A1- 19 838 391**
**JP-A- 8 079 865     JP-T- 2002 502 561**
**US-A- 5 033 093**

**Description**

TECHNICAL FIELD

The present invention relates to a sound-permeable member equipped with a waterproof sound-permeable membrane and relates to a method of manufacturing the same.

BACKGROUND ART

Since electric products, such as a cellular phone, a notebook PC, an electronic notepad and a digital camera, often are used outdoors, it is desirable for these products to have waterproof performance. The portion difficult to give waterproof performance may be a sound emitting portion, such as a loudspeaker and a buzzer, or may be a sound receiving portion, such as a microphone.

For example, a housing of the cellular phone has an opening in the position corresponding to a microphone or a loudspeaker. A balance between sound permeability and waterproofness can be achieved by closing the opening formed in the housing with a sound-permeable member. The sound-permeable member can be a member equipped with a waterproof sound-permeable membrane that allows gas to pass therethrough and blocks liquid. Examples of the waterproof sound-permeable membrane include a polytetrafluoroethylene (PTFE) porous membrane and an ultrahigh-molecular-weight polyethylene (UHMWPE) porous membrane as disclosed in JP 2815618 B and JP 2004-83811 A.

It is known that the waterproofness of the PTFE porous membrane and the UHMWPE porous membrane becomes higher as those average pore sizes become small. However, when the average pore size becomes small, the area density becomes large and sound permeability will deteriorate. That is, there is a trade-off between sound permeability and waterproofness. Therefore, it is not easy to improve waterproofness without reducing sound permeability.

As a standard for waterproofness of common electrical machineries, "JIS C 0920" provides "Waterproof test for electrical machineries and apparatuses and Degrees of protection against solid foreign objects". In that standard, the class of waterproofness of electrical machineries and apparatuses is shown by nine levels, protection classes 0 to 8. The protection class 7 (immersion proof) indicates machineries and apparatuses having a performance that admits no trace of water ingress even after it has been immersed in water at a depth of one meter for 30 minutes. Machinery and apparatuses with the protection class 6 (water-resistant) or lower are not designed for immersion in water. Accordingly, waterproofness equivalent to the protection class 7 is required to prevent failure of a product even when the product is accidentally dropped in water.

When trying to achieve such a high waterproofness of a product using a sound-permeable member, problems, such as difficulty to hear a sound, degradation of sound quality (deterioration of acoustic characteristics), and disadvantage in power consumption due to the need to make the default sound volume high, occur inevitably. Such problems contribute to difficulty in the widespread use of products with high waterproof performance. DE 198 38 391 and US 5 033 093 also disclose a sound permeable member.

With the foregoing in mind, an object of the present invention is to improve the sound permeability of a sound-permeable member equipped with a waterproof sound-permeable membrane while maintaining high waterproofness.

DISCLOSURE OF THE INVENTION

The present invention is defined by claim 1 and, according to an alternative, provides a sound-permeable member including:

a waterproof sound-permeable membrane that allows sound to pass therethrough and blocks liquid from passing therethrough; and
a main body having an opening for passing sound, the opening being closed by the waterproof sound-permeable membrane,
wherein the waterproof sound-permeable membrane is fixed to the main body in a slack state.

In another alternative, the present invention defined by claim 1 provides a sound-permeable member including:

a waterproof sound-permeable membrane that allows sound to pass therethrough and blocks liquid from passing therethrough; and
a main body having an opening for passing sound, the opening being closed by the waterproof sound-permeable membrane,
wherein the waterproof sound-permeable membrane is deformed so that at least a part of the waterproof sound-permeable membrane is spaced apart from a base flat plane including a boundary surface between the waterproof sound-permeable membrane and the main body.

In yet another aspect, the present invention provides a method of manufacturing a sound-permeable member including a waterproof sound-permeable membrane that allows sound to pass therethrough and blocks liquid from passing therethrough and a main body having an opening for passing sound, the opening being closed by the waterproof sound-permeable membrane, the method being defined by claim 4 and including the steps of:

cutting the waterproof sound-permeable membrane into a predetermined shape applicable to the opening of the main body;
fixing the waterproof sound-permeable membrane that has been cut to the main body; and
deforming the waterproof sound-permeable membrane in advance before fixing to the main body so that when the waterproof sound-permeable membrane is fixed to the main body, at least a part of the waterproof sound-permeable membrane is spaced apart from a base flat plane including a boundary surface between the waterproof sound-permeable membrane and the main body.

It should be noted that these steps may be performed in no particular order or a plurality of the steps may be performed at the same time.
The present inventors diligently studied the sound permeability of a waterproof sound-permeable membrane. And the inventors found that the sound permeability of the waterproof sound-permeable membrane is affected not only by the physical properties of the waterproof sound-permeable membrane but also by how the membrane is fixed to an object (main body), especially by the presence or absence of slack. A mechanism in which sound passes through the waterproof sound-permeable membrane involves both a mechanism in which sound passes through pores of the waterproof sound-permeable membrane and a mechanism in which sound propagates by vibrating the waterproof sound-permeable membrane. In the case of a waterproof sound-permeable membrane with high waterproofness, the mechanism in which sound propagates by vibrating the waterproof sound-permeable membrane becomes dominant because the pores are very small. This is also apparent from the existence of a correlation between the sound permeability and the area density. When the passage of sound is mainly contributed by the vibration of the waterproof sound-permeable membrane, the excellence of sound permeability depends not only on the physical properties of the waterproof sound-permeable membrane but also on how the waterproof sound-permeable membrane is fixed to the object.
Generally, the waterproof sound-permeable membrane is fixed to an object so that it has almost no slack. If the waterproof sound-permeable membrane is tensioned without slack, resonance will occur in the surface of the waterproof sound-permeable membrane, and the distortion of sound will become large, especially at high frequencies. Since the distortion of sound increases the loss of energy, sound permeability deteriorates. On the other hand, when the waterproof sound-permeable membrane is fixed to the object so that it slackens moderately, the energy loss of sound can be suppressed because the above-mentioned phenomenon hardly occurs. As a result, excellent sound permeability can be achieved. Therefore, the present invention makes it possible to improve sound permeability of a sound-permeable member equipped with a waterproof sound-permeable membrane, while maintaining high waterproofness.
In the manufacturing method of the present invention, the waterproof sound-permeable membrane is deformed in advance before fixing to the main body so that at least a part of the waterproof sound-permeable membrane is spaced apart from the base flat plane including the boundary surface between the waterproof sound-permeable membrane and the main body. Therefore, it becomes possible to efficiently manufacture the sound-permeable member in which the waterproof sound-permeable membrane is fixed to the main body in a slack state. Moreover, other steps, such as a step of fixing the waterproof sound-permeable membrane to the main body, are not affected, and there is almost no possibility that the slack deteriorates waterproofness.

BRIEF DESCRIPTION OF THE DRAWINGS

Fig. 1A shows a front view of a cellular phone to which a sound-permeable member according to the present embodiment is attached.
Fig. 1B shows an enlarged partial sectional view of Fig. 1A.
Fig. 1C is an enlarged sectional view showing another embodiment of how a waterproof sound-permeable membrane is fixed.
Fig. 2A shows a perspective view of the waterproof sound-permeable membrane.
Fig. 2B is a perspective view showing another embodiment of the waterproof sound-permeable membrane.
Fig. 2C is also a perspective view showing another embodiment of the waterproof sound-permeable membrane.
Fig. 3 is an illustration showing a method of quantifying slack.

Fig. 4 is an illustration showing a method of measuring insertion loss.

Fig. 5A is an illustration showing a manufacturing process of the sound-permeable member.

Fig. 5B is an illustration showing a manufacturing process following Fig. 5A.

Fig. 6A shows a sectional view of the waterproof sound-permeable membrane held between two separators.

Fig. 6B shows a plan view of Fig. 6A.

Fig. 7A is a plan view showing other shapes of the separator and the waterproof sound-permeable membrane.

Fig. 7B is a plan view showing yet other shapes of the separator and the waterproof sound-permeable membrane.

Fig. 7C is a plan view showing yet other shapes of the separator and the waterproof sound-permeable membrane.

BEST MODE FOR CARRYING OUT THE INVENTION

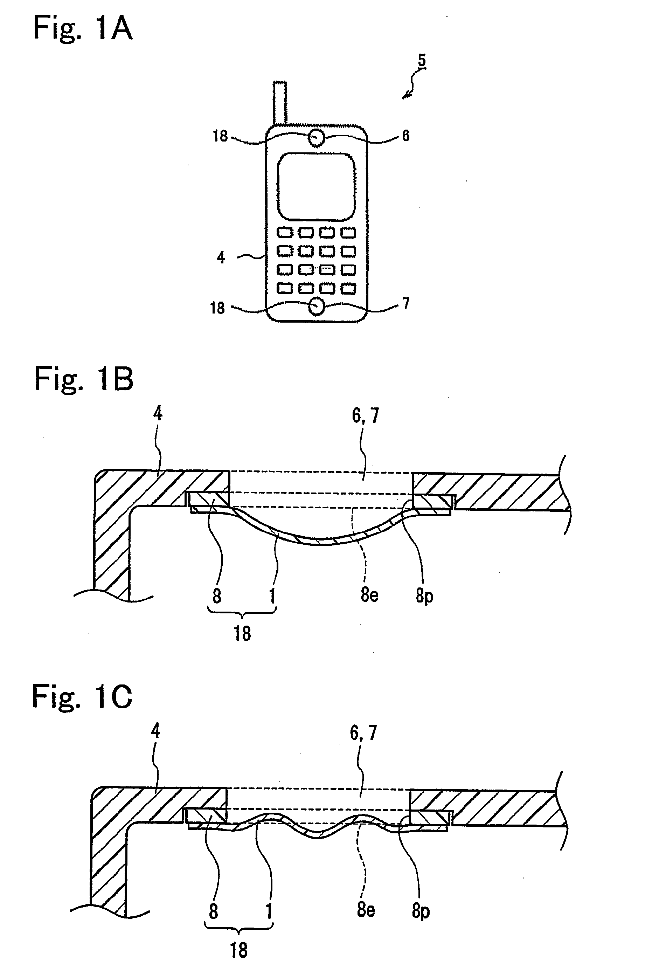

Hereinafter, embodiments of the present invention will be described with reference to the accompanying drawings. Fig. 1A shows a front view of a cellular phone equipped with a sound-permeable member of the present embodiment. Fig. 1B shows an enlarged partial sectional view of Fig. 1A and is exaggerating the form of the waterproof sound-permeable membrane.

As shown in Fig. 1A, in a housing 4 of a cellular phone 5, openings 6 and 7 are formed in the position corresponding to a microphone and a loudspeaker. Sound-permeable members 18 are attached to each of the openings 6 and 7 of the housing 4 from the inside. The method of attaching the sound-permeable member 18 to the housing 4 is not particularly limited as long as it can prevent foreign matters, such as water and dust, from entering inside the housing 4. For example, the sound-permeable member 18 may be attached by welding or may be attached using adhesives.

As shown in Fig. 1B, the sound-permeable member 18 is equipped with a waterproof sound-permeable membrane 1 and a main body 8 having an opening 8p for passing sound. While the waterproof sound-permeable membrane 1 allows sound to pass therethrough, it blocks liquid from passing therethrough and prevents water and dust from entering inside the housing 4. The diameter of the opening 8p of the main body 8 is the almost same as the diameters of the openings 6 and 7 of the housing 4. The main body 8 is, for example, a frame-like component that is formed of the same material as the housing 4.

The waterproof sound-permeable membrane 1 may be attached directly to the openings 6 and 7 of the housing 4. In this case, a part of the housing 4 to which the waterproof sound-permeable membrane 1 is attached constitutes a sound-permeable member of the present invention.

As shown in Fig. 1B, the waterproof sound-permeable membrane 1 is fixed to the main body 8 in a slack state so that it slackens in the thickness direction. In other words, the waterproof sound-permeable membrane 1 is spaced apart from a base flat plane 8e including the bonding surface between the waterproof sound-permeable membrane 1 and the main body 8. An adequate slack in the waterproof sound-permeable membrane 1 can improve sound permeability compared with the case where it is fixed without slack. It should be noted that the base flat plane 8e is synonymous with a flat plane including a ring-shaped opening end of the opening 8p formed in the main body 8. The waterproof sound-permeable membrane 1 in this embodiment slackens in such a manner that it shows a convex curve toward the inside of the housing 4. However, it may slacken so that it shows a convex curve toward outside of the housing 4.

The waterproof sound-permeable membrane 1 does not necessarily slacken in a form of simple curvature as shown in Fig. 1B. For example, as shown in Fig. 1C, the waterproof sound-permeable membrane 1 may slacken so as to have a portion located in one side (above) and a portion located in the other side (below) with respect to the base flat plane 8e. In other words, the waterproof sound-permeable membrane 1 may slacken as it shows a wavelike shape in a cross-section perpendicular to the base flat plane 8e. In another aspect, the waterproof sound-permeable membrane 1 also can be perceived as being wrinkled slightly. When at least a part of the waterproof sound-permeable membrane 1 is spaced apart from the base flat plane 8e as mentioned above, the advantageous effect of improving sound permeability can be obtained.

A membrane having gas permeability in both thickness direction and in-plane direction can be used as the waterproof sound-permeable membrane 1. Neither structure nor material of the membrane is particularly limited. Resin porous membranes, such as a PTFE porous membrane and a UHMWPE porous membrane, are preferable as the waterproof sound-permeable membrane 1 because these membranes can ensure sufficient gas permeability with small area and have high capability to prevent foreign matters from entering inside the housing 4. The PTFE porous membrane can be produced by uniaxial stretching or biaxial stretching of a PTFE film. A UHMWPE porous membrane can be produced by performing steps of sintering, casting, extruding, and stretching (dry process or wet process) using ultrahigh-molecular-weight polyethylene (UHMWPE) as a raw material. The average molecular weight of UHMWPE is about 1 million, for example.

The porous membrane is especially preferable as the waterproof sound-permeable membrane 1 for the following reasons. Generally, materials that are called sound-permeable membranes include porous ones and non-porous ones. When using a non-porous membrane that is made of, for example, polyethylene terephthalate or polyimide, a frequency range where the transmission loss is specifically large or small may generate in accordance with its natural frequency, resulting in a tendency for the original sound not to be transmitted precisely. On the other hand, when using a porous membrane, part of the sound passes through pores. Accordingly, a frequency range where the transmission loss is specifically large or small is not likely to be generated compared with using a non-porous membrane, resulting in a tendency for the original sound to be transmitted precisely. Excellent sound permeability and acoustic characteristics can be obtained because of both the above-mentioned feature of the porous membrane and the advantageous effect due to slack in the waterproof sound-permeable membrane 1.

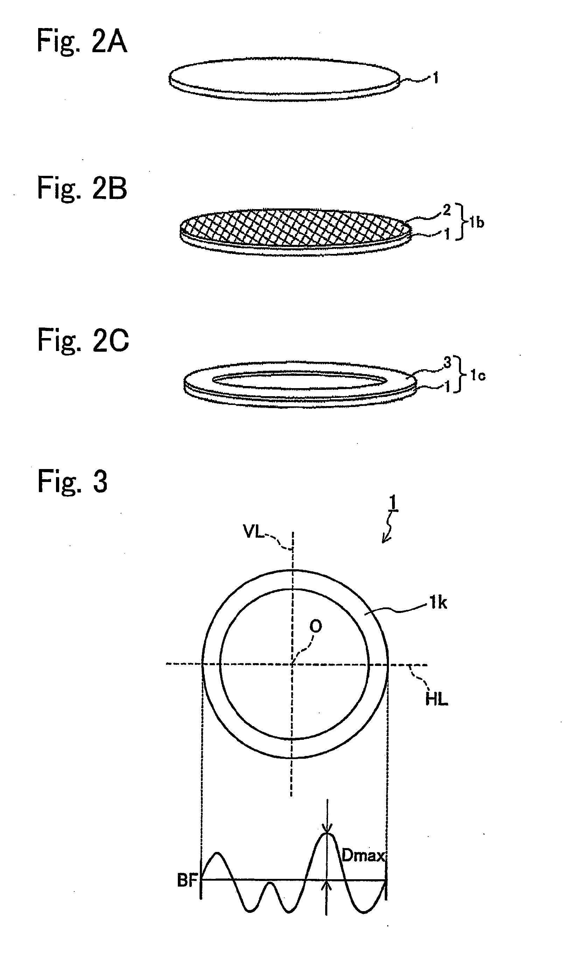

The shape of the waterproof sound-permeable membrane 1 may be circular as shown in Fig. 2A or may be another shape, such as a rectangle. This also can be applied to the shape of the main body 8. The waterproof sound-permeable membrane 1 may be subjected to a water-repellent treatment using a water-repellent agent, such as fluorine-containing polymer, in order to improve waterproofness.

Moreover, the waterproof sound-permeable membrane may be reinforced with a reinforcing member. Specifically, a waterproof sound-permeable membrane 1b including a resin porous membrane 1 and a reinforcing member 2 integrated with the resin porous membrane 1 as shown in Fig. 2B can be employed. The reinforcing member 2 preferably is formed of resin material, such as polyester resin, polyethylene resin and aramid resin. The form of the reinforcing member 2 can be a woven fabric, a nonwoven fabric, a mesh, a net, a sponge, a foam, or a porous body.

As shown in Fig. 2B, the shape of the reinforcing member 2 may or may not be the same as that of the resin porous membrane 1. For example, a ring-shaped reinforcing member 3 may be integrated with the disk-like resin porous membrane 1, just like a waterproof sound-permeable membrane 1c shown in Fig. 2C. The reinforcing members 2 and 3 may be provided only on one surface of the resin porous membrane 1 or may be provided on both surfaces.

The thickness of the waterproof sound-permeable membrane 1 can be adjusted in the range of 2 $\mu$m to 1 mm in view of its strength and ease of fixing to the main body 8. The gas permeability of the waterproof sound-permeable membrane 1 is preferably in the range of 0.1 to 500 sec/100 ml when expressed as the Gurley value obtained using the Gurley method specified by JIS P 8117.

The average pore size of the waterproof sound-permeable membrane 1 (a resin porous membrane 1) is controlled by, for example, adjusting the stretching ratio so that it can withstand water pressure properly. It is preferable to control the average pore size of the waterproof sound-permeable membrane 1 so that the membrane achieves the waterproof protection class 7 and achieves the water pressure resistance of 9.8 kPa that is equivalent to a depth of one meter in water. Although depending also on other conditions such as thickness, it becomes easy to obtain sufficient waterproofness when the average pore size measured with a bubble point method is in the range of 0.05 to 1.0 $\mu$m. The bubble point method is a measuring method in which the membrane is soaked with liquid and is subjected to air pressurization, and then the pore size is obtained from the pressure at which the liquid is extruded through the pore. Moreover, it is preferable that the waterproof sound-permeable membrane 1 can withstand higher water pressure as long as the sound permeability does not deteriorate severely. For example, it is ideal that the water pressure resistance of the waterproof sound-permeable membrane 1 be 100 kPa or more, because it allows the waterproof protection class 7 to be achieved by a safe margin.

The surface density of the waterproof sound-permeable membrane 1 is controlled so as to obtain good sound permeability. Specifically, it is preferable that the insertion loss of the waterproof sound-permeable membrane 1 be 2 dBA or less in order to keep good sound permeability in the audible range. Such insertion loss can be achieved easily when the area density is 30 g/m$^2$ or less. On the other hand, it is preferable that the lower limit of the area density of the waterproof sound-permeable membrane 1 be, for example, 2 g/m$^2$ from the point of view of ensuring sufficient strength and good processability. In the case of using the waterproof sound-permeable membranes 1b or 1c having the reinforcing members 2 or 3, the area density of the whole including the reinforcing members 2 or 3 is preferably in the above-mentioned range.

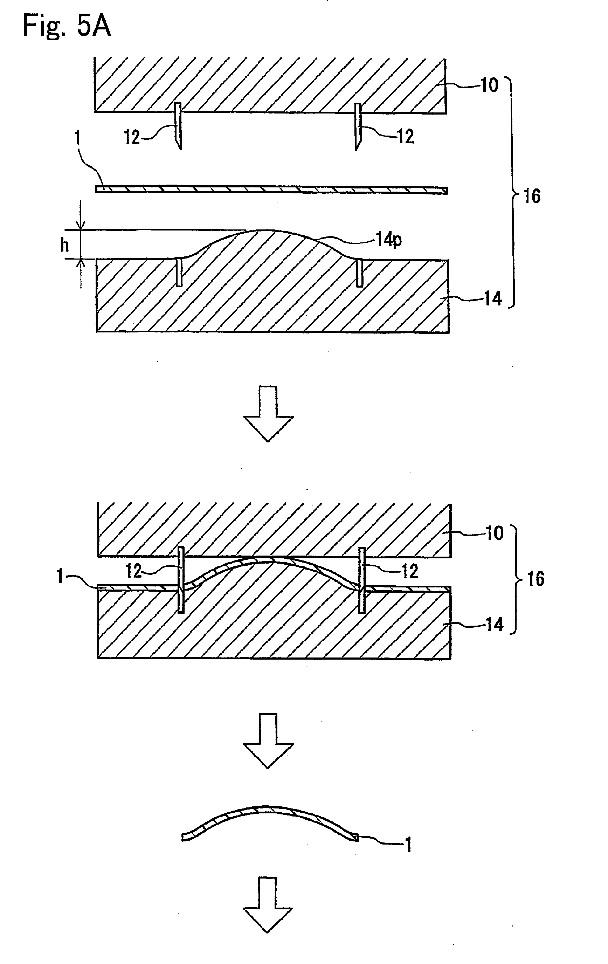

The method for allowing the waterproof sound-permeable membrane 1 to slacken is not particularly limited. Performing a step of deforming the waterproof sound-permeable membrane 1 in advance before fixing it to the main body 8 makes it possible easily to slacken the waterproof sound-permeable membrane 1 that have been fixed to the main body 8. Furthermore, a method described below makes it possible to perform, at one time, both a step of cutting the waterproof sound-permeable membrane 1 into a predetermined shape applicable to the opening 8p of the main body 8 and a step of deforming the waterproof sound-permeable membrane 1. In order to conduct this method, a punch die (Thomson die) having a configuration shown in Fig. 5A can be used.

As shown in Fig. 5A, a punch die 16 includes a base 10, a cutter 12 and a platen 14. A groove is formed in the base 10. The cutter 12 is bent into the same shape as the groove in the base 10 and is fitted in the groove. The platen 14 has a surface 14p on which the waterproof sound-permeable membrane 1 is to be mounted. The cutter 12 fixed to the base 10 is placed in a position facing the platen 14. The base 10 and the platen 14 are driven by an actuator. Using the actuator, the cutter 12 and the platen 14 are moved closer to and away from each other, thereby the waterproof sound-permeable membrane 1 provided on the platen 14 is cut into a predetermined shape by the cutter 12.

Although a general platen has a flat surface without unevenness, the surface 14p of the platen 14 has a bulge of an appropriate height "h" in this embodiment. When the cutter 12 contacts and cuts the waterproof sound-permeable membrane 1 provided on the platen 14, the bulge in the surface 14p of the platen 14 pushes up the waterproof sound-permeable membrane 1, thereby transferring the shape of the bulge in the surface 14p of the platen 14 to the waterproof sound-permeable membrane 1.

Thus, the step of cutting the waterproof sound-permeable membrane 1 and the step of deforming the waterproof sound-permeable membrane 1 can be performed simultaneously by using a die that serves as both a deforming die and a cutting die. Productivity is improved because the number of the steps substantially is reduced by one. Of course, the step of cutting the waterproof sound-permeable membrane 1 and the step of deforming the waterproof sound-permeable membrane 1 may be performed individually and in no particular order.

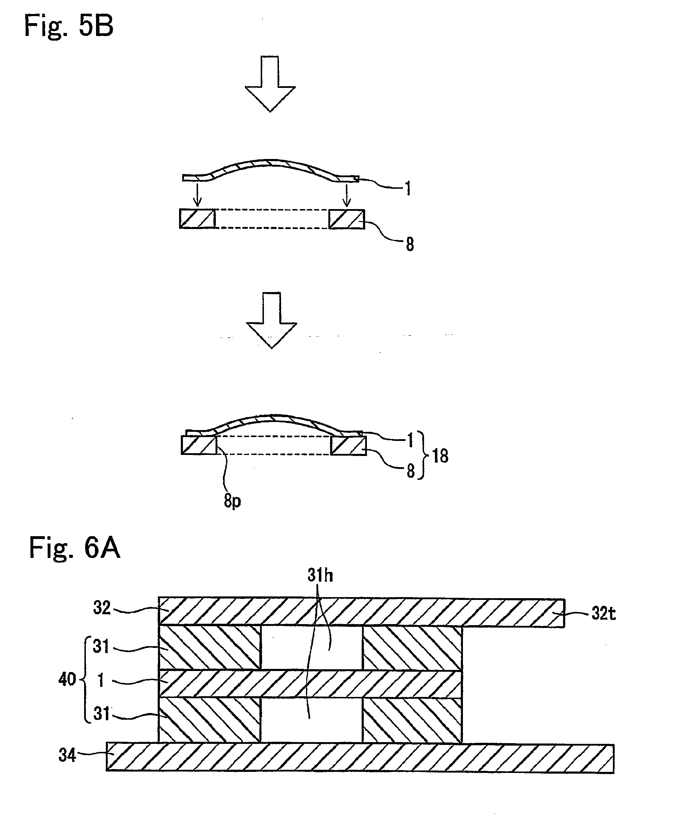

With the above-mentioned method, the waterproof sound-permeable membrane 1 deformed in advance is provided. Next, a step of fixing the waterproof sound-permeable membrane 1 to the main body 8 is performed as shown in Fig. 5B. In this way, the waterproof sound-permeable membrane 1 slackens after fixing to the main body 8. Methods such as attaching with a double-stick tape, heat welding, high frequency welding, and ultrasonic welding are preferably employed for fixing the waterproof sound-permeable membrane 1 to the main body 8. When other layers, such as an adhesive layer, are present between the waterproof sound-permeable membrane 1 and the main body 8, a flat plane including the boundary surface between the other layer and the waterproof sound-permeable membrane 1 can be defined as the base flat plane 8e.

The waterproof sound-permeable membrane 1 may be provided in the form of an assembly in which a double-stick tape is attached to each of front and rear surfaces of the waterproof sound-permeable membrane 1. As shown in Fig. 6A, an assembly 40 includes the waterproof sound-permeable membrane 1 and two double-stick tapes 31 each attached to the front surface and the rear surface of the waterproof sound-permeable membrane 1. The double-stick tape 31 has a shape of a ring or a rectangular frame when viewed in plane. The waterproof sound-permeable membrane 1 is exposed at the opening 31h of the double-stick tape 31. The waterproof sound-permeable membrane 1 to which the double-stick tapes 31 are attached is made to slacken in advance with the method described with reference to Fig. 5A. A mounting separator 34 is provided on one surface of the assembly 40, and a tabbed separator 32 is provided on the other surface. Since the assembly 40 is held between the separators 32 and 34, the waterproof sound-permeable membrane 1 can be protected securely and is easy to attach to a subject, such as a housing or a support.

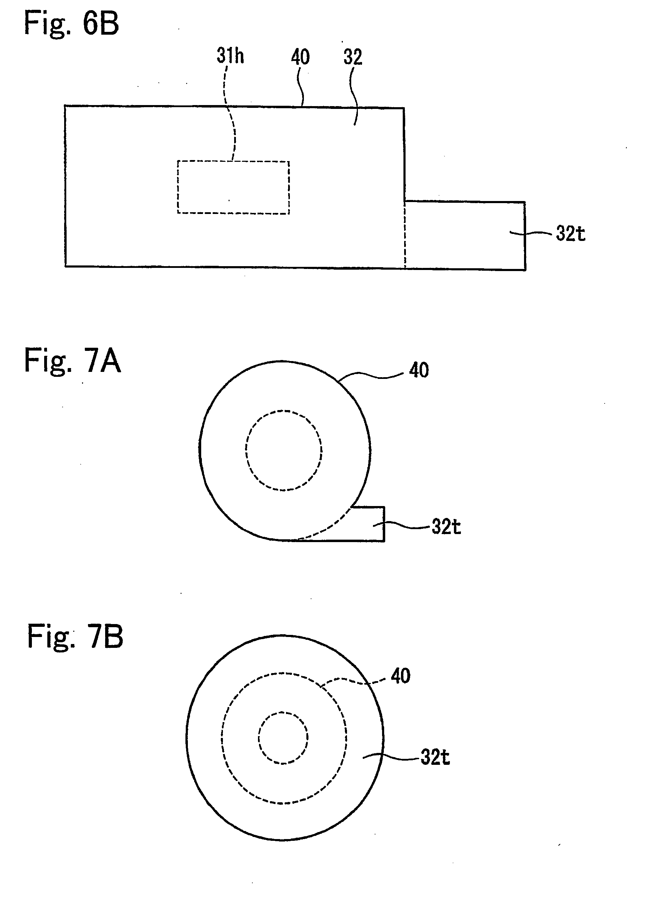

The separator 32 can be removed from the mounting separator 34 along with the assembly 40. As shown in the plan view of Fig. 6B, a tab 32t of the separator 32 is formed so as to protrude outward from the outer edge of the assembly 40. The assembly 40 can be attached to a subject while holding the tab 32t of the separator 32. The separator 32 can be removed easily from the assembly 40 by pulling up the tab 32t. Thus, the waterproof sound-permeable membrane 1 rarely is damaged during handling because the waterproof sound-permeable membrane 1 can be attached to a subject without touching the waterproof sound-permeable membrane 1 directly. Moreover, the possibility of damaging the subject also can be reduced.

The separators 32 and 34 may be made of resin, such as polyethylene, polypropylene and polyethylene terephthalate, or may be made of paper. The mounting separator 34 may have an embossed portion on which the assembly 40 is to be mounted. It is preferable that the adhesive strength (180° peel bond strength) between the tabbed separator 32 and the double-stick tape 31 be stronger than the adhesive strength between the mounting separator 34 and the double-stick tape 31. This makes it easier to remove the tabbed separator 32 from the mounting separator 34 along with the assembly 40.

One assembly 40 is equipped with one tabbed separator 32. On the other hand, many assemblies 40 may share the mounting separator 34, or one assembly 40 may be equipped with one mounting separator 34. The latter product is produced by the steps of mounting the tabbed separator 32 on the assembly 40 and punching out the mounting separator 34 larger than the tabbed separator 32.

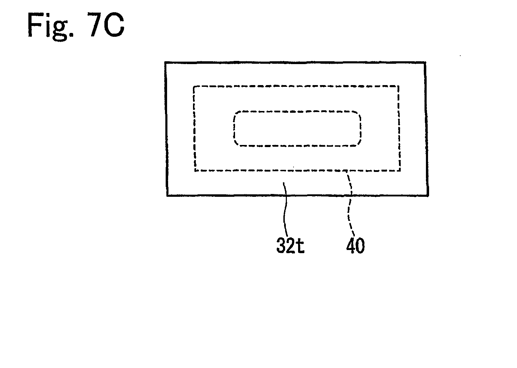

The shapes of the assembly 40 and the tabbed separator 32 are not particularly limited. The assembly 40 may be circular as shown in Fig. 7A. Moreover, the tab 32t having a round shape may be formed over the whole circumference of the assembly 40 as shown in Fig. 7B. Alternatively, the assembly 40 may be rectangular, and the tab 32t may have, in planar view, a shape of a rectangular frame surrounding the assembly 40 as shown in Fig. 7C.

«Quantification of Slack»

Quantification of slack in the waterproof sound-permeable membrane 1 can be conducted using a three-dimensional shape measurement system, which is commercially available. The three-dimensional shape measurement system is, for example, a system equipped with a laser displacement sensor that scans a surface of an object with a laser beam and measures the displacement of the object's surface from a base flat plane. The three-dimensional surface shape of the object can be obtained from the displacement measured using the laser displacement sensor.

The slack in the waterproof sound-permeable membrane 1 can be quantified as follows. First, two central lines "VL" and "HL" that pass through the center "O" of the waterproof sound-permeable membrane 1 and cross orthogonally with each other are defined as shown in Fig. 3. Next, the displacements of the waterproof sound-permeable membrane 1 from a base flat plane "BF" (that is, the distance from the base flat plane BF to the surface of the waterproof sound-permeable membrane 1) at arbitrary points on the central lines VL and HL are measured using the three-dimensional shape measurement system. The displacement at each measurement point is the amount of the slack at the measurement point. When making measurements with the waterproof sound-permeable membrane 1 being rotated, the three-dimensional profile of the surface of the waterproof sound-permeable membrane 1 can be obtained. The ratio R obtained by the following formula (1) can be employed as a value indicating whether the slack in the waterproof sound-permeable membrane 1 is large or small. "Dmax" represents the maximum value of the measured displacement (the amount of the slack), and "Dm" represents the diameter of the waterproof sound-permeable membrane 1.

$$R = Dmax/Dm\ (\%)\quad \cdots (1)$$

The base flat plane BF shown in Fig. 3 is just the base flat plane 8e shown in Fig. 1B and Fig. 1C, and the displacement of the waterproof sound-permeable membrane 1 from the base flat plane 8e is defined as the amount of the slack at each measurement point. The amount of the slack in the waterproof sound-permeable membrane 1 also may be measured before the waterproof sound-permeable membrane 1 is fixed to the main body 8. It should be noted that the diameter Dm of the waterproof sound-permeable membrane 1 represents the diameter of the whole (the maximum diameter) including a fixation margin "1k" to be fixed to the main body. When the waterproof sound-permeable membrane 1 has a shape except circular, the diameter of a circle having the same area as the shape (that is, equivalent diameter) can be employed as the diameter Dm.

«Insertion loss»

Although the waterproof sound-permeable membrane 1 has excellent sound permeability, reduction in sound volume and sound distortion are inevitable. A loudness level at a certain frequency is expressed by noise level (unit decibel: dBA). The sound permeability of the waterproof sound-permeable membrane 1 is expressed using insertion loss. The insertion loss is the difference between noise levels before and after a sound passes through the waterproof sound-permeable membrane 1, and is represented by the following formula (2).

$$Insertion\ loss\ (dBA) = |\ S1{-}S2\ |\quad \cdots (2)$$

S1: A noise level (dBA) measured in the absence of the waterproof sound-permeable membrane
S2: A noise level (dBA) measured in the presence of the waterproof sound-permeable membrane

In the formula (2), the insertion loss is expressed by the absolute value of the difference. If a sound attenuates when passing through the waterproof sound-permeable membrane 1, the sound after passing becomes smaller and the insertion loss becomes larger. Moreover, when a sound is distorted due to resonance and the like, the sound after passing may become larger than its original sound at a certain frequency. In any case, when the insertion loss is large, a sound will deviate from its original sound, resulting in difficulty in hearing. When the insertion loss is small, the sound quality will be improved and the output of a loudspeaker can be kept low. Therefore, the amount of the slack in the waterproof sound-permeable membrane 1 preferably is adjusted so that the insertion loss becomes minimal.

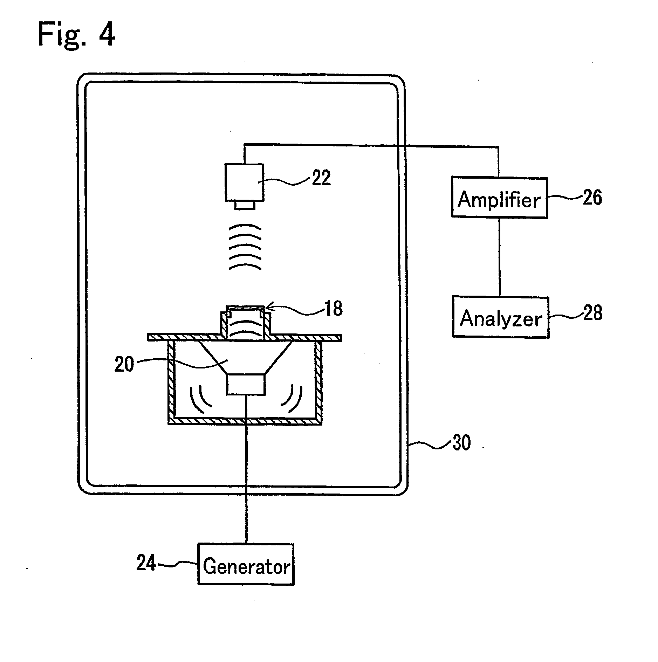

The insertion loss can be measured using a measuring system shown in Fig. 4. First, a loudspeaker 20 of a product (for example, cellular phone) to which the sound-permeable member 18 is applied is exposed. A microphone 22 is placed at a position that is a predetermined distance away from the loudspeaker 20. The loudspeaker 20 and the microphone 22 are placed in an anechoic room 30. A pink noise is input to the loudspeaker 20 using a generator 24. The output of the microphone 22 is amplified with a conditioning amplifier 26, and the amplified output is sent to an analyzer 28. The noise level (dBA) is obtained using the analyzer 28. The noise level is measured in both cases where the waterproof sound-permeable membrane 1 (a sound-permeable member 18) is present between the loudspeaker 20 and the microphone 22 (the state shown in Fig. 4) and where not (not shown). The insertion loss is calculated according to the above-mentioned formula (2) using the measurement result of the noise level.

"Noise level (dBA)" is described in detail as follows. The amount of the pressure change caused by a sound wave that propagates in a fluid is called sound pressure. Human perception of sound is approximately proportional to the logarithm of the sound pressure. Generally, the value "$L_p$" (unit: dB) defined by the following formula (3) is called the sound pressure level. "p" indicates the sound pressure and "po" indicates the reference sound pressure ($2\times5^{-5}$ Pa). The loudness perceived by a human listener also is affected by frequency. The sound pressure level that has been subjected to frequency weighting based on human auditory characteristics is called noise level (A-weighted sound pressure level).

$$L_p = 20 \log (p/p_0) \quad (3)$$

Examples

Hereafter, the present invention will be described more specifically by way of samples that actually were prepared. However, the present invention is not limited by the following examples.

First, a PTFE porous membrane (NTF1026 manufactured by NITTO DENKO CORP.) having a surface on which a nonwoven fabric (a reinforcing member) was laminated was provided as a waterproof sound-permeable membrane that had not been deformed. The characteristics of the waterproof sound-permeable membrane were as follows. Gas permeability was measured using the Gurley method mentioned above. Water pressure resistance was measured according to the water penetration test (high pressure method) specified by JIS L 1092. However, the membrane was deformed largely when following the specified area of JIS L 1092. Therefore, measurement was made while a stainless steel mesh (aperture size: 2 mm) was placed at the opposite side of the pressurized side of the membrane in order to suppress the deformation.

Area density: 9 g/m$^2$

Gas permeability: 10 sec/100 ml

Water pressure resistance: 240 kPa

Thickness: 20 $\mu$m

Next, the waterproof sound-permeable membrane was punched out into circular shape having a diameter of 15 mm using the Thomson die described with Fig. 5A. Four kinds of Thomson dies each including a platen having a surface bulge of 0 mm (no bulge), 0.1 mm, 0.2 mm, or 0.4 mm were prepared, and four kinds of waterproof sound-permeable membranes were produced. Next, double-stick tapes (No.532 manufactured by NITTO DENKO CORP.) cut into a ring-shape having the outside diameter of 15 mm and the inside diameter of 13 mm were attached to the waterproof sound-permeable membranes above, and thus Samples 1 to 4 were obtained.

Next, the amounts of slack in Samples 1 to 4 were measured using the method described with Fig. 3. A commercially available high-speed three-dimensional shape measurement system (EMS98AD-3D made by COMS Co., Ltd.) was used in measurement. Maximum value Dmax was extracted from a number of measured values, and the ratio to the diameter Dm (15 mm) of the waterproof sound-permeable membrane was calculated. The results were shown in Table 1. It should be noted that the amount of the slack in Sample 1 was almost zero (Dmax/Dm $\leq$ 0.02%).

Next, the insertion losses of Samples 1 to 4 were measured using the system described with Fig. 4. The following instruments were used in the system. The measurement frequencies were 400 Hz, 800 Hz, 3000 Hz and 4000 Hz. These frequencies appear notably in the usual conversation. The microphone was fixed at the position 30 cm away from the waterproof sound-permeable membrane. The voltage of the pink noise inputted into the loudspeaker from the generator was 250mVrms. The results are shown in Table 1.

Analyzer: Multi-analyzer System Type 3560 (Pulse) made by B&K Precision Corp. Generator: 4/2-ch Input/Output Module Type 3109 made by B&K Precision Corp.

Microphone: Type 4190 made by B&K Precision Corp.

Conditioning amplifier: Conditioning Amplifier NEXUS made by B&K Precision Corp.

Cellular phone: G'z One W42CA made by CASIO COMPUTER CO., LTD.

Table 1

| | Bulge in the Platen h (mm) | Dmax/Dm (%) | Insertion Loss (dBA) | | | |
|---|---|---|---|---|---|---|
| | | | 400Hz | 800Hz | 3000Hz | 4000HZ |
| Sample 1 | 0 | 0 | 2.8 | 1.2 | 1.0 | 1.0 |
| Sample 2 | 0.1 | 0.2 | 0.5 | 0.2 | 1.5 | 1.3 |
| Sample 3 | 0.2 | 1.0 | 0.6 | 0.2 | 1.6 | 1.5 |
| Sample 4 | 0.4 | 1.5 | 1.7 | 1.3 | 2.5 | 2.0 |

The insertion losses of Sample 1 at 3000 Hz and 4000 Hz were small, but its insertion losses at 400 Hz and 800 Hz were large. With respect to Sample 2 and Sample 3, there was no frequency at which the insertion loss was particularly large. All the insertion losses of Sample 2 and Sample 3 were less than 2.0 dBA. Even if the insertion loss is small at a certain frequency, the sound will deviate from its original sound when the insertion loss is large at other frequencies. It is preferable for the improvement of acoustic characteristics that the insertion loss be small throughout the whole audible region. In view of that, Sample 2 and Sample 3 were excellent. On the other hand, the insertion loss of Sample 4 was large on the whole. It is thought that excessive energy will be needed for vibrating the waterproof sound-permeable membrane when the slack is too large, and thus the insertion loss becomes larger.

According to the above results, it is preferable that the maximum value Dmax of the amount of the slack be in the range of 0.2% to 1.0% of the diameter Dm of the waterproof sound-permeable membrane. When deforming the sound-permeable membrane in advance (in other words, designing the platen) so as to meet such a condition, the reduction of the insertion loss can be optimized and thus the waterproof sound-permeable member (housing) having excellent sound permeability and acoustic characteristics can be realized.

**Claims**

1. A sound-permeable member comprising:

   a waterproof sound-permeable membrane (1) that allows sound to pass therethrough and blocks liquid from passing therethrough; and
   a main body (8) having an opening (8p) for passing sound, the opening (8p) being closed by the waterproof sound-permeable membrane (1),
   **characterized in that** the waterproof sound-permeable membrane (1) includes a resin porous membrane, wherein
   the waterproof sound-permeable membrane (1) is deformed so that at least a part of the waterproof sound-permeable membrane (1) is spaced apart from a base flat plane (8e) including a boundary surface between the waterproof sound-permeable membrane (1) and the main body (8), and when displacement of the waterproof sound-permeable membrane (1) from the base flat plane (8e) is defined as an amount of slack in the waterproof sound-permeable membrane (1), a maximum value of the amount of slack is in a range of 0.2 to 1.0% of a diameter of the waterproof sound-permeable membrane (1).

2. The sound-permeable member according to claim 1, wherein the resin porous membrane is a polytetrafluoroethylene porous membrane or an ultrahigh-molecular-weight polyethylene porous membrane.

3. The sound-permeable member according to claim 1 or 2, wherein each of insertion losses of the sound-permeable member at 400 Hz, 800 Hz, 3000 Hz and 4000 Hz is less than 2.0 dBA.

4. A method of manufacturing a sound-permeable member comprising a waterproof sound-permeable membrane (1) that allows sound to pass therethrough and blocks liquid from passing therethrough and a main body (8) having an opening (8p) for passing sound, the opening (8p) being closed by the waterproof sound-permeable membrane (1), the method comprising the steps of:

   cutting the waterproof sound-permeable membrane (1) into a predetermined shape applicable to the opening (8p) of the main body (8);
   fixing the waterproof sound-permeable membrane (1) that has been cut to the main body (8); and
   deforming the waterproof sound-permeable membrane (1) in advance before fixing to the main body (8) so that when the waterproof sound-permeable membrane (1) is fixed to the main body (8), at least a part of the waterproof sound-permeable membrane (1) is spaced apart from a base flat plane (8e) including a boundary surface between the waterproof sound-permeable membrane (1) and the main body (8)
   wherein when displacement of the waterproof sound-permeable membrane (1) from the base flat plane (8e) is defined as an amount of slack in the waterproof sound-permeable membrane (1), the waterproof sound-permeable membrane (1) is deformed in advance before fixing to the main body (8) so that a maximum value of the amount of slack is in a range of 0.2 to 1.0% of a diameter of the waterproof sound-permeable membrane (1).

5. The method of manufacturing the sound-permeable member according to claim 4, wherein the step of cutting the waterproof sound-permeable membrane (1) and the step of deforming the waterproof sound-permeable membrane (1) are performed simultaneously by using a die that serves as both a deforming die and a cutting die.

6. The method of manufacturing the sound-permeable member according to claim 5, wherein
   the die includes: a platen on which the waterproof sound-permeable membrane (1) to be cut is to be mounted; and a cutter that is placed at a position facing the platen and is moved closer to and away from the platen so as to cut the waterproof sound-permeable membrane (1) provided on the platen into a predetermined shape,
a surface of the platen has a bulge, and
the bulge in the surface of the platen pushes up the waterproof sound-permeable membrane (1) when the cutter contacts and cuts the waterproof sound-permeable membrane (1) mounted on the platen, thereby transferring the shape of the bulge in the surface of the platen to the waterproof sound-permeable membrane (1).

**Patentansprüche**

1.  Schalldurchlässiges Element, umfassend:

    eine wasserdichte schalldurchlässige Membran (1), die es Schall erlaubt, hindurch zu gehen, und Flüssigkeit am Durchgang hindert, und
    einen Hauptkörper (8), der eine Öffnung (8p) zum Durchlassen von Schall aufweist, wobei die Öffnung (8p) von der wasserdichten schalldurchlässigen Membran (1) verschlossen ist,
    **dadurch gekennzeichnet, dass** die wasserdichte schalldurchlässige Membran (1) eine poröse Harz-Membran umfasst, wobei
    die wasserdichte schalldurchlässige Membran (1) deformiert ist, so dass zumindest ein Teil der wasserdichten schalldurchlässigen Membran (1) von einer flachen Basisebene (8e) beabstandet ist, welche eine Begrenzungsoberfläche zwischen der wasserdichten schalldurchlässigen Membran (1) und dem Hauptkörper (8) umfasst, und, wenn ein Versatz der wasserdichten schalldurchlässigen Membran (1) von der flachen Basisebene (8e) als ein Durchhangbetrag in der wasserdichten schalldurchlässigen Membran (1) definiert wird, ein maximaler Wert des Durchhangbetrags in einem Bereich von 0,2 bis 1,0 % eines Durchmessers der wasserdichten schalldurchlässigen Membran (1) liegt.

2.  Schalldurchlässiges Element nach Anspruch 1, wobei die poröse Harz-Membran eine poröse Polytetrafluorethylen-Membran oder ein poröse Membran aus Polyethylen mit ultrahoher Molekularmasse ist.

3.  Schalldurchlässiges Element nach Anspruch 1 oder 2, wobei Einfügungsverluste des schalldurchlässigen Elements bei 400 Hz, 800 Hz, 3.000 Hz und 4.000 Hz jeweils kleiner als 2,0 dBA sind.

4.  Verfahren zum Herstellen eines schalldurchlässigen Elements, das eine wasserdichte schalldurchlässige Membran (1), welche es Schall erlaubt, hindurch zu gehen, und Flüssigkeit am Durchgang hindert, und einen Hauptkörper (8) umfasst, welcher eine Öffnung (8p) zum Durchlassen von Schall aufweist, wobei die Öffnung (8p) von der wasserdichten schalldurchlässigen Membran (1) verschlossen ist, wobei das Verfahren die folgenden Schritte umfasst:

    Schneiden der wasserdichten schalldurchlässigen Membran (1) in eine vorgegebene Gestalt, welche an der Öffnung (8p) des Hauptkörpers (8) anwendbar ist,
    Befestigen der wasserdichten schalldurchlässigen Membran (1), welche geschnitten wurde, an dem Hauptkörper (8), und
    Deformieren der wasserdichten schalldurchlässigen Membran (1) vor einem Befestigen an dem Hauptkörper (8), so dass, wenn die wasserdichte schalldurchlässige Membran (1) an dem Hauptkörper (8) befestigt wird, zumindest ein Teil der wasserdichten schalldurchlässigen Membran (1) von einer flachen Basisebene (8e) beabstandet ist, welche eine Begrenzungsoberfläche zwischen der wasserdichten schalldurchlässigen Membran (1) und dem Hauptkörper (8) umfasst,
    wobei, wenn ein Versatz der wasserdichten schalldurchlässigen Membran (1) von der flachen Basisebene (8e) als ein Durchhangbetrag in der wasserdichten schalldurchlässigen Membran (1) definiert wird, die wasserdichte schalldurchlässige Membran (1) vor einem Befestigen an dem Hauptkörper (8) deformiert wird, so dass ein maximaler Wert des Durchhangbetrags in einem Bereich von 0,2 bis 1,0 % eines Durchmessers der wasserdichten schalldurchlässigen Membran (1) liegt.

5.  Verfahren zum Herstellen des schalldurchlässigen Elements nach Anspruch 4, wobei der Schritt des Schneidens der wasserdichten schalldurchlässigen Membran (1) und der Schritt des Deformierens der wasserdichten schalldurchlässigen Membran (1) gleichzeitig unter Verwendung einer Form durchgeführt werden, welche sowohl als eine deformierende Form als auch als eine schneidende Form dient.

**6.** Verfahren zum Herstellen des schalldurchlässigen Bauteils nach Anspruch 5, wobei
die Form umfasst: einen Presstisch, auf welchem die wasserdichte schalldurchlässige Membran (1), welche geschnitten werden soll, befestigt wird, und ein Schneidwerk, welches an einer Position gegenüber dem Presstisch angeordnet ist und näher zu dem Presstisch und weg von ihm bewegt wird, um so die wasserdichte schalldurchlässige Membran (1), welche auf dem Presstisch bereitgestellt ist, in eine vorgegebene Gestalt zu schneiden,
eine Oberfläche des Presstisches eine Ausbauchung aufweist, und
die Ausbauchung in der Oberfläche des Presstisches die wasserdichte schalldurchlässige Membran (1) aufwärts drückt, wenn das Schneidwerk die wasserdichte schalldurchlässige Membran (1), welche auf dem Presstisch befestigt ist, andrückt und schneidet, wodurch die Gestalt der Ausbauchung in der Oberfläche des Presstisches auf die wasserdichte schalldurchlässige Membran (1) übertragen wird.

## Revendications

**1.** Elément laissant passer le son comportant :

une membrane laissant passer le son étanche à l'eau (1) qui permet au son de passer à travers et empêche un liquide de passer à travers ; et
un corps principal (8) ayant une ouverture (8p) pour le passage du son, l'ouverture (8p) étant fermée par la membrane laissant passer le son étanche à l'eau (1),
**caractérisé en ce que** la membrane laissant passer le son étanche à l'eau (1) comprend une membrane poreuse en résine,
la membrane laissant passer le son étanche à l'eau (1) est déformée de telle sorte qu'au moins une partie de la membrane laissant passer le son étanche à l'eau (1) est espacée d'un plan de base plat (8e) comprenant une surface de limite entre la membrane laissant passer le son étanche à l'eau (1) et le corps principal (8), et
quand le déplacement de la membrane laissant passer le son étanche à l'eau (1) par rapport au plan de base plat (8e) est défini comme une quantité de détente dans la membrane laissant passer le son étanche à l'eau (1), une valeur maximale de la quantité de détente est dans une plage de 0,2 à 1,0% d'un diamètre de la membrane laissant passer le son étanche à l'eau (1).

**2.** Elément laissant passer le son selon la revendication 1, dans lequel la membrane poreuse en résine est une membrane poreuse en polytétrafluoroéthylène ou une membrane poreuse en polyéthylène à poids moléculaire très élevé.

**3.** Elément laissant passer le son selon la revendication 1 ou 2, dans lequel chacune des pertes d'insertion de l'élément laissant passer le son à 400 Hz, 800 Hz, 3000 Hz et 4000Hz est inférieure à 2dBA.

**4.** Procédé de fabrication d'un élément laissant passer le son comportant une membrane laissant passer le son étanche à l'eau (1) qui permet au son de passer à travers et empêche un liquide de passer à travers et un corps principal (8) ayant une ouverture (8p) pour le passage du son, l'ouverture (8p) étant fermée par la membrane laissant passer le son étanche à l'eau (1), le procédé comportant les étapes de :

découpe de la membrane laissant passer le son étanche à l'eau (1) dans une forme prédéterminée pouvant être appliquée sur l'ouverture (8p) du corps principal (8) ;
fixation de la membrane laissant passer le son étanche à l'eau (1) qui a été découpée sur le corps principal (8) ; et
déformation de la membrane laissant passer le son étanche à l'eau (1) à l'avance avant fixation sur le corps principal (8) de telle sorte que, quand la membrane laissant passer le son étanche à l'eau (1) est fixée sur le corps principal (8), au moins une partie de la membrane laissant passer le son étanche à l'eau (1) est espacée d'un plan de base plat (8e) comprenant une surface de limite entre la membrane laissant passer le son étanche à l'eau (1) et le corps principal (8),
quand le déplacement de la membrane laissant passer le son étanche à l'eau (1) par rapport au plan de base plat (8e) est défini comme une quantité de détente dans la membrane laissant passer le son étanche à l'eau (1), la membrane laissant passer le son étanche à l'eau (1) est déformée à l'avance avant fixation sur le corps principal (8) de telle sorte qu'une valeur maximale de la quantité de détente est dans une plage de 0,2 à 1,0% d'un diamètre de la membrane laissant passer le son étanche à l'eau (1).

**5.** Procédé de fabrication de l'élément laissant passer le son selon la revendication 4, selon lequel l'étape de découpe de la membrane laissant passer le son étanche à l'eau (1) et l'étape de déformation de la membrane laissant passer le son étanche à l'eau (1) sont réalisée simultanément en utilisant une matrice qui sert à la fois de matrice de déformation et de matrice de découpe.

6. Procédé de fabrication de l'élément laissant passer le son selon la revendication 5, selon lequel
   la matrice comprend : un plateau sur lequel la membrane laissant passer le son étanche à l'eau (1) devant être découpée doit être montée ; et un dispositif de coupe qui est placé dans une position face au plateau et est rapproché et écarté du plateau de façon à couper la membrane laissant passer le son étanche à l'eau (1) prévue sur le plateau dans une forme prédéterminée,
   une surface du plateau a un renflement, et
   le renflement dans la surface du plateau soulève la membrane laissant passer le son étanche à l'eau (1) quand le dispositif de coupe entre en contact avec et coupe la membrane laissant passer le son étanche à l'eau (1) montée sur le plateau, en transférant ainsi la forme du renflement dans la surface du plateau à la membrane laissant passer le son étanche à l'eau (1).

## Fig. 1A

## Fig. 1B

## Fig. 1C

# Fig. 2A

# Fig. 2B

# Fig. 2C

# Fig. 3

# Fig. 4

22

18

20

24 — Generator

Amplifier — 26

Analyzer — 28

30

## Fig. 5A

## Fig. 5B

## Fig. 6A

Fig. 6B

Fig. 7A

Fig. 7B

Fig. 7C

32t   40

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2815618 B
- JP 2004083811 A
- DE 19838391
- US 5033093 A